# EUROPEAN PATENT APPLICATION

(11) **EP 4 349 200 A2**
(43) Date of publication of application: **10.04.2024**
(21) Application number: 24158636.1
(22) Date of filing: 19.02.2021
(51) Int. Cl.: A42B 3/12

(54) **SHOCK-ABSORBING MATERIAL**

(30) Priority: 21.02.2020 SE 2050195; 21.02.2020 SE 2050196
(62) Divisional of application: 21707649.6
(71) Applicant: Cenesy AB, 182 66 Djursholm (SE)
(72) Inventor: VON HOLST, Hans, 182 66 DJURSHOLM (SE)
(74) Representative: Noréns Patentbyrå AB

(57) **Abstract**

There is provided a flooring system configured for providing a floor to be installed on a base floor, the flooring system comprising an upper layer and a lower layer that are not permanently attached to each other, where the underside of the lower layer has a plurality of deformable support members configured to be in contact with the base floor, and to be deformed when a load is placed on the upper surface of the floor, and where the upper layer is provided as a sheet and the lower layer is provided as tiles, where the floor-covering area of the sheet is larger than the floor-covering area of each of the tiles.

## Description

### Field of the invention

This invention relates to a shock-absorbing material that can be used for example in a helmet or in a horseshoe. There is also provided a flooring system for preventing injuries.

### Background

Serious head injuries, such as traumatic brain injuries, occur in traffic, in the workplace and during sports activities. There is still an unacceptable number of head injuries worldwide. There is a need for an improved helmet, in particular a helmet that absorbs oblique impacts, that is, impacts that are not perpendicular to the surface of the helmet. Thus, it would be advantageous to prevent traumatic brain injuries by an improved head worn device.

Traumatic brain injury may lead to serious injuries or death. Traumatic brain injury in the elderly is often caused by falling. The incidence is about 140 cases per 100 000 persons per year, causing great stress on the healthcare system.

It would be advantageous to prevent traumatic brain injury caused by falling.

Floors in hospitals must be compatible with hospital beds. The floor must permit the rolling of movable hospital beds and the beds and other furniture should not leave permeant marks caused by residual indentation on the floors.

The legs of horses are subject to high stress when the horse is walking, trotting or galloping. This frequently leads to fractures or other injuries.

Hence there is need for an improved material that absorbs shocks.

### Summary of the invention

In a first aspect of the invention there is provided an elastomeric sheet with a thickness of from 5 mm to 20 mm the elastomeric sheet having with a first side and a second side, where the first side has a plurality of deformable support members where the support members have a cavity with an opening towards the second side of the elastomeric sheet, and where the hardness of the material of the sheet is from 40 Shore A to 80 Shore A. The hardness of the material is preferably from 50 Shore A to 60 Shore A. The cavities provide improved shoch absorption and low weight.

The support members are essentially pyramid shaped. This provides improved shock absorption.

The height of the support members in relation to the total thickness of the elastomeric sheet may be from 70 to 90 % of the total thickness of the elastomeric layer.

The width of the cavity may be the same along the depth of the cavity. The volume of the cavity is preferably at most 50 % of the volume of the support member.

In a second aspect of then invention there is provided a shock-absorbing layer of a head worn device comprising an elastomeric sheet according to the first aspect of the invention and a mesh layer in contact with the elastomeric layer. The mesh provides improved protection against oblique impacts as the mesh may slide against the elastomeric sheet.

In third aspect of the invention there is provided a soft head-worn item comprising an elastomeric sheet according to the first aspect of the invention. A soft head-worn item may be preferred over for example a helmet when used for protecting for example elderly against falls in everyday situations. The item may for example be a hat or a head band. These have lower weight than a helmet.

The soft head worn item may comprise an inner layer that is arranged to rest against the head of the user and a mesh layer in contact with the elastomeric layer between the elastomeric sheet and the inner layer. The mesh layer may be in contact with the support members.

### Drawings

The accompanying drawings form a part of the specification and schematically illustrate preferred embodiments of the invention, and serve to illustrate the principles of the invention.
Fig. 1 is a schematic side view of an elastomeric sheet.
Figs. 2a-d are schematic views of first sides of elastomeric sheets.
Figs. 3-4 shows an elastomeric sheet.
Fig. 5 is a cross section of an elastomeric sheet along lines a-a of Fig. 4.
Fig. 6 is a schematic cross section of an elastomeric sheet along lines b-b of Fig. 5.
Fig. 7 is a schematic cross section of a helmet.
Fig. 8 is a cross section of a helmet.
Fig. 9 shows an elastomeric sheet.
Fig. 10 is a cross section of an elastomeric sheet along lines c-c of Fig. 9.
Fig. 11 is a cross section of an elastomeric sheet along lines d-d of Fig. 9.
Fig. 12 and 13 are cross sections of an elastomeric sheet that shows how it behaves during impact in a test setup.
Figs. 14-17 are schematic cross sections of a part of a head worn device.
Fig. 18 is a cross section of a of a part of a head worn device.
Fig. 19 is a cross section of a part of a head worn device.
Fig. 20 is a schematic drawing of a mesh.
Figs. 21-22 shows a head band.
Fig. 23 is cross section of a head band indicated by arrows in Fig. 22.
Fig. 24 is a cross section of a head band.
Fig. 25 is a schematic drawing of a hoof of a horse with a horseshoe.
Fig. 26 is a schematic drawing of a horseshoe.
Fig. 27 is a schematic cross section of a horseshoe.
Fig. 28 shows a horseshoe.
Figs. 29-30 shows a hoof of a horse with a horseshoe.
Fig. 31 shows a floor.
Fig. 32 is a schematic drawing of a floor installed on a base floor.
Fig. 33 is a schematic drawing of a lower layer/elastomeric sheet.
Fig. 34 shows a lower layer as viewed from the underside.
Fig. 35 is a cross section of a lower layer along lines e-e of Fig. 34
Fig. 36 is a cross section of a lower layer along lines f-f of Fig. 34.
Figs. 37 and 38 are cross sections of a floor that shows how it behaves during impact.
Fig. 39 is a schematic view of a sheet and tiles.
Fig. 40 is a schematic drawing of a configuration of a lower layer of a floor seen from above.
Fig. 41 is a flowchart that shows a method.
Fig. 42 is a photo of a mesh material.

### Detailed description

The elastomeric sheet 2 according to the invention may be used for a wide range of applications where it is useful to dampen shock. Examples of applications include flooring, protective clothing such as a helmet, a hat or a headband and sports equipment, for example a horseshoe, or in machinery.

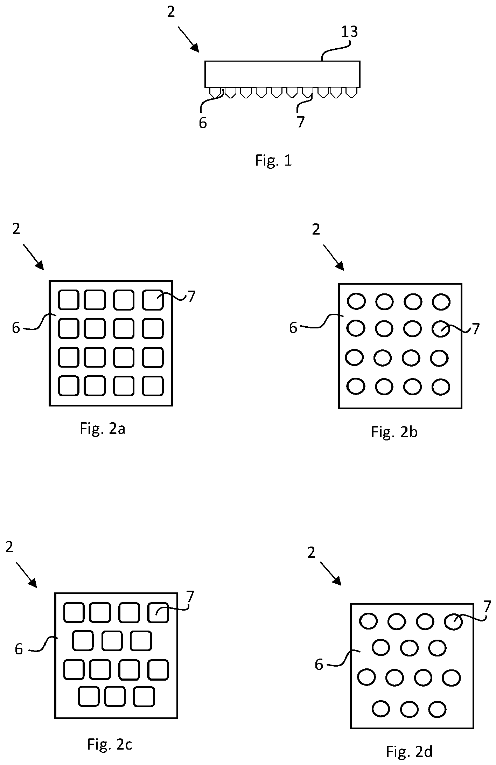

With reference to Figs. 1 and 2a-d the elastomeric sheet 2 has a plurality of deformable support members 7 said support members 7 being configured to be deformed upon shock (mechanical shock). The elastomeric sheet 2 has first side 6 that has support members 7 and a second side 13 that is essentially flat.

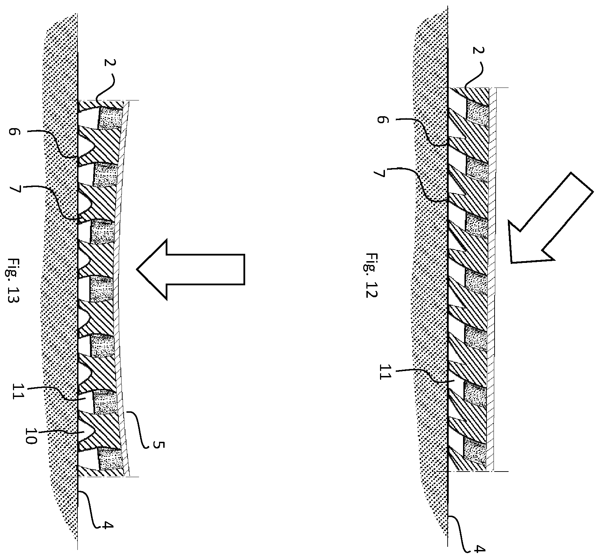

The support members 7 are configured to be deformed when the elastomeric sheet 2 receives an impact (see below with reference to Figs. 12-13, 29-30 and 37-38). The main purpose of elastomeric sheet 2 is to provide shock absorption, that is, to absorb the energy of an impact. This is achieved by the selection of the material of elastomeric sheet 2 and the deformable supports members 7.

The hardness of the material of the elastomeric sheet 2 is preferably from 40 Shore A to 80 Shore A, even more preferably from 50 Shore A to 60 Shore A, and most preferably from 53 Shore A to 58 Shore A. Permeably the elastomeric sheet 2 is made from one material with a defined harness, hence the hardness of the elastomeric sheet 2 is preferably uniform.

The elastomeric sheet 2 may be made from rubber or any other suitable elastomer. The elastomer may be a polymer. Suitable elastomers include various rubber materials for example: styrene butyric rubber, butyric rubber, isoprene rubber, butylic rubber, eten propene rubber, nitrilic butadiene rubber, chloroprene rubber, polyurethane rubber, acryl eten rubber and propene oxide rubber. Butyl rubber (IIR) is a preferred material.

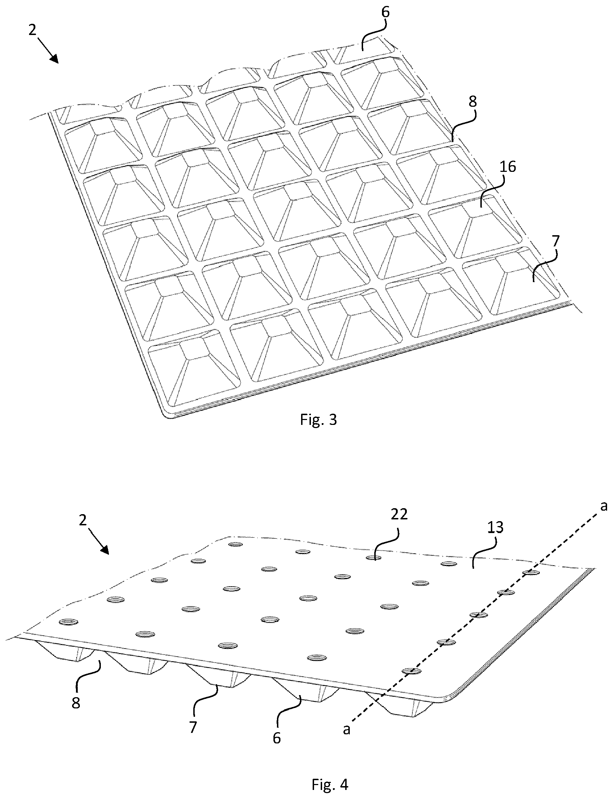

It is preferred that the elastomeric sheet 2 and the support members 7 are essentially solid, that is that they are essentially made of a solid material. However, each of the support members 7 may have at least one cavity 17 or aperture 11 as shown in for example Figs. 4-6 and 9-10 and 34-35. As used herein the cavity 17 only has an opening to one of the sides of the elastomeric sheet 2, whereas an aperture 11 has openings towards both sides of the elastomeric sheet 2.

The support members 7 may be arranged in any suitable pattern. Non-limiting examples of shapes and arrangements of support members 7 are shown in Figs. 2a-2d. The support members 7 can have any suitable shape such as oval, circular etc. The distance between the members 7 may for example 10-20 mm (c/c), preferably 13-18 mm. The thickness 21 of the elastomeric sheet 2 is preferably from 5 - 20 mm. The height 20 of the support members 7 in relation to the total thickness 21 of the elastomeric sheet 2 may be 25-90 %, of the total thickness of the elastomeric layer 2.

It is preferred that the support members 7 are narrowing towards the tip of the support member 7. Hence the base of the support member 7 is preferably wider than the tip. It is preferred that the support members 7 have an aperture 11 from the fist side to the second side or a cavity 17 which is open to the fist side or the second side, where an opening towards the second side is preferred. The purpose of aperture 11 or cavity 17 is to provide springiness to the elastomeric sheet 2 and to reduce weight.

The elastomeric sheet 2 may be used in various applications where it is useful to dampen shock such as in clothing, sports equipment, flooring, helmet or machinery.

With reference to Figs. 3-6, which shows a preferred embodiment of the elastomeric sheet 2, the support members 7 are preferably square, and pyramid shaped and arranged in a matrix pattern. The top of the pyramid-shaped support members 7 may be have a flat surface 16. The pyramid shaped support members may have four sides, thus having a square base as show in the Figs. 3-6 but they may also have three sides (the base of the support member is then triangular). The angle of the side of the pyramid-shaped support members may be from 40° to 50° in relation the second side 13.

The height 20 of the support members 7 in relation to the total thickness 21 of the elastomeric sheet 2 may be 25-90 %, more preferably 50% -90%, more preferably 70-90 % of the total thickness of the elastomeric layer 2. The thickness 21 of the elastomeric sheet 2 is preferably from 5 to 20 mm, more preferably 6 to 10 mm and most preferably from 6 mm to 9 mm. For example, the total thickness 21 of the elastomeric layer 2 may be from 6 to 9 mm and the height 20 of the support members 7 may be from to 4.2 mm to 8.1 mm.

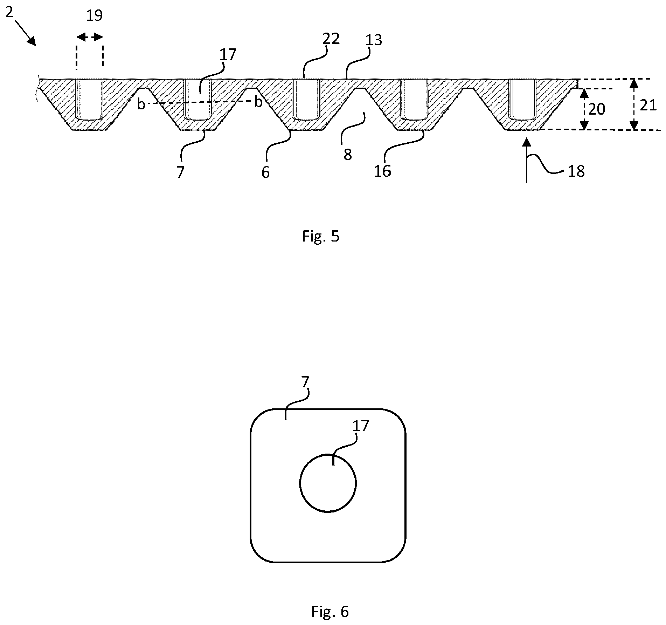

The support members 7 may be essentially solid as shown in Figs. 3-6. It is preferred that the otherwise solid support members 7 have a cavity 17. The cavity 17 is preferably located in the middle of the support member (Fig. 6) when the support member 7 is observed from direction of arrow 18 in Fig 5 (central location of cavity 17). The cavity 17 may have any suitable shape but is preferably cylinder shaped.

The cavity 17 has at least one opening 22 on the first side 6 or the second side 13, and in Figs. 3-6 it is shown how the cavity 17 has one opening 22 on the second side 13. The main direction of cavity 17 is preferably perpendicular to the main plane of the elastomeric sheet 2. The cavity 17 may be in the form of a cylinder-shaped cavity 17 that opens towards the second side 13 as shown in Figs. 3-6. The width 19 of the cavity is preferably the same along the height of the support member 7 as shown in Fig 5. The diameter of the cavity when it is cylinder shaped may be from 2 mm - 4 mm. The depth of the cavity may preferably be from 2 to 4 mm.

The volume of the cavity 17 is preferably at most 50 %, more preferably at most 40 % and even more preferably at most 30 % of the volume of the support member 7. The volume of the support member is calculated as the part of the support member 7 that is indicated by arrow 20.

### Head-worn device

The head worn device may be a helmet, a hat or a head band.

The head worn device can be worn by a user to protect the user during sports activities (biking, skiing, riding, for example), in the workplace (such as at construction sites) or in traffic (such as by motorcyclists), or otherwise. When the head worn device is a hat or a headband it may particularly be useful in everyday use by the elderly, or by persons with poor balance.

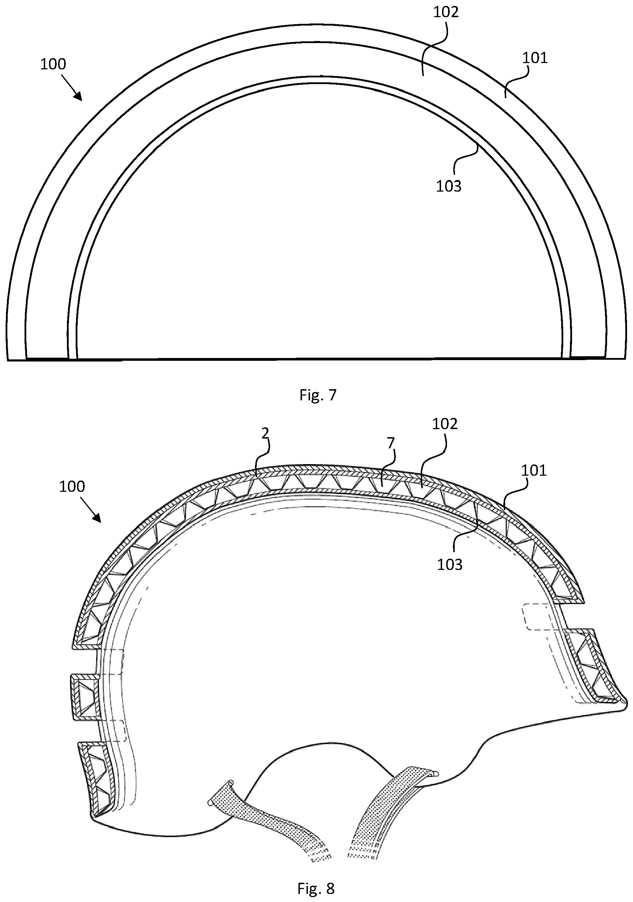

The head worn device will now be described in more detail mainly in reference to a helmet. Fig 7. shows a head worn device 100 which is a helmet. The helmet comprises outer layer 101, shock absorbing layer 102 and optional inner layer 103. It should be observed that, for clarity, the thickness of the layers is exaggerated in Fig. 7. The outer layer 101 and the inner layer 103 are referred to herein as "second layer".

The outer layer 101 is preferably in the form of a hard shell. The outer layer 101 may be formed in a polymer material such as for example polycarbonate, polyvinylchloride or ABS and may be reinforced with fibers such as carbon fibers or Kevlar. The outer layer 101 is preferably thinner than the shock-absorbing layer 102. The outer layer 101 may serve the purpose of distributing the shock of an impact to shock absorbing layer 102. The outer layer 101 may also provide protection against perforation, such as cuts.

The optional inner layer 103 is suitable for resting against the head of a user and is preferably comfortable for the user. The inner layer 103 may be adjustable in order to provide a snug fit on the head of the user. Hence inner layer 103 may be loosely fitted to shock absorbing layer 102 in order to be adjustable to the head of the user. Inner layer 103 may comprise an adjustable band that is circumferential in relation to the head of the user, in order to adjust the helmet to the head of the user.

The helmet may preferably have an attachment device for attaching the helmet to the head. The attachment device is preferably a chin strap.

The outer layer 101, the inner layer 103 and the shock absorbing 102 layer are preferably attached to each other. One or more layers may for example be glued together, in particular outer layer 101 and shock absorbing layer 102. The outer layer 101 is preferably thinner than the shock-absorbing layer 102 and may have a thickness of approximately 1-4 mm or 2-3 mm. The inner layer 103 is also preferably thinner than the shock-absorbing layer 102 and may have a thickness of 1 - 4 mm or 2-3 mm.

It should be noted that each layer of the helmet may comprise additional layers providing different functions as strength, shock, water proofing, insulation, colour, attachment between layers (such as glue) or adjustability of helmet.

The shock absorbing layer 102 comprises at least one layer of an elastomeric sheet 2.

The shock absorbing layer 102 preferably comprises one or two or more of the elastomeric sheets 2 as described below. The thickness of the shock absorbing layer 102 is preferably from 5-40, more preferably from 8-30 mm and even more preferably from 16-24 mm.

In a preferred embodiment the elastomeric sheet 2 of the helmet has the shape and dimensions described with reference to Figs 3-6 (pyramid shaped supports 7 with cavity 17). An example of such a helmet is shown in Fig. 8.

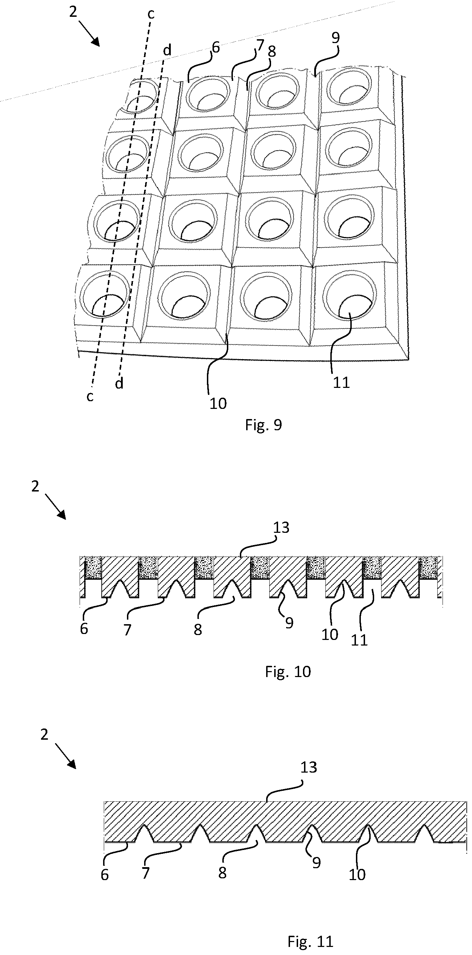

Figs. 9-11 shows one embodiment of the support members 7 where the support members have a square configuration (grooves meet at 90° angles) and have apertures 11.

In an alternative embodiment and with reference to Figs. 9-11 the height of the support members 7 in relation to the total thickness of the elastomeric sheet 2 may be 25% -75%, more preferably 30-60 % of the total thickness of the elastomer layer 2.

With reference to Figs. 9-11, the support members 7 may for example have the shape of members separated by grooves 8 in a criss-cross pattern. The grooves 8 may have a depth which is 25 % to 75 %, more preferably 30% -60% of the total thickness of the elastomeric sheet 2. The grooves 8 may for example have a depth of for example 4-6 mm. The grooves 8 may have a width of 3-8 mm, preferably 4-6 mm. The walls 9 of the grooves may be slanted as shown in Figs. 9-11 such that the profile of the grooves 8 is conical. The grooves 8 may have a flat or a pointed bottom 10 (where a pointed bottom is shown in Figs. 9-11.

The thickness of the elastomeric sheet 2 shown in Figs 9-11 is preferably from 5 to 20 mm, more preferably 8-15 mm, even more preferably 8-12 mm. The elastomeric sheet 2 is preferably provided with trough holes or apertures, hereafter referred to as apertures 11. The apertures 11 go from the first side 6 of the elastomeric sheet 2 to the second side 13 of the elastomeric sheet 2. Apertures 11 are preferably perpendicular to the elastomeric sheet 2. The apertures 11 may have a diameter of from 4-7 mm and may be spaced for example 10-20 mm (c/c), preferably 13-18 mm apart. The shortest distance between the holes may be 6-10 mm. The apertures 11 may be placed in the centre of the support members 7, as shown in Figs. 46-48.

Figs. 12-13 show how the elastomeric sheet 2 of Figs 9-11 behaves upon receiving an oblique shock (Fig. 12) or a translational shock (Fig. 13) in a test set-up. The sheet 2 is covered by a shock-distributing layer which may mimic the behaviour of outer layer 101 of helmet 100 in that it distributes the shock to the elastomeric sheet 2. The elastomeric sheet 2 is placed on a hard surface 4 and a weight is allowed to fall onto the surface 5 of the sheet 2. The arrows indicate the direction of impact on the shock-distributing layer 5 of the sheet 2.

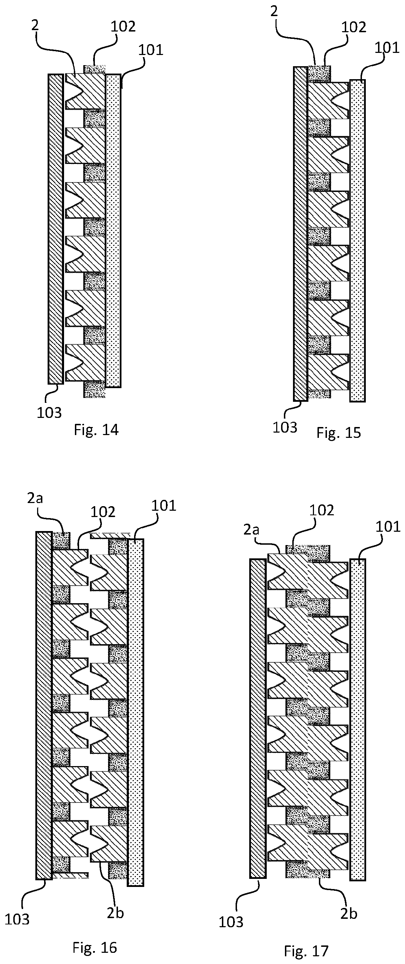

Figs. 14 to 17 show cross sections of a head worn device 100. Figs 14 and 15 show embodiments with one elastomeric sheet 2, where the support members 7 of the elastomeric sheet points towards the inner layer 103 and the outer layer 101, respectively.

In Fig. 16, two elastomeric sheets 2a, 2b are arranged with the supporting members 7 pointing towards each other thereby forming a shock-absorbing layer 102 between outer layer 101 and inner layer 103.

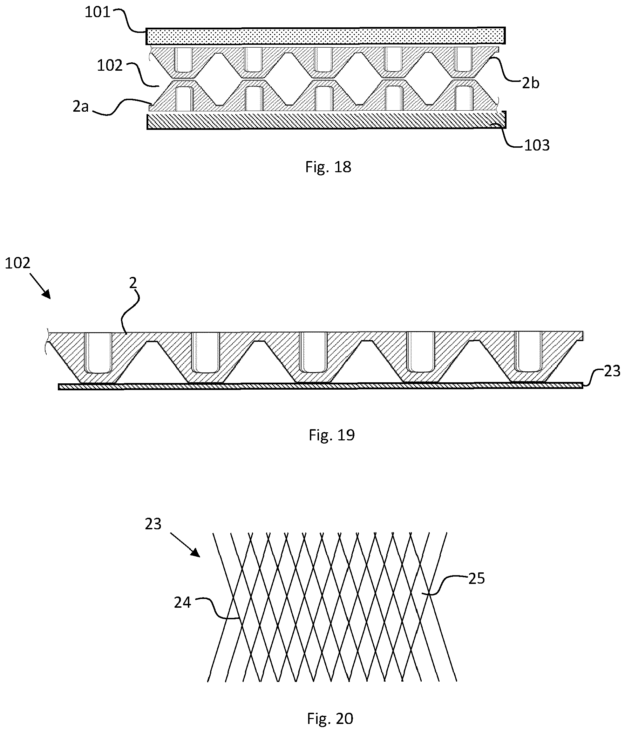

Fig. 18 shows an embodiment double layer of the material of Figs. 3 to 6 where the support members are pointing towards each other. It may be preferred that the tips of the support members 7 (for example flat surface 16) rests against each other.

In Fig. 17 the support members 7 are pointing in opposite directions, as one set of support members 7 point towards the inner layer 103 and one set of support members 7 point out towards the outer layer 101. With reference to Figs 16-17 it should be noted that the support members 7 of elastomeric sheets 2a, 2b may also point in the same direction. When two or more elastomeric layers 2a, 2b are used they may optionally be attached to each first or second surfaces 6,13, for example with glue. Hence the plurality of elastomeric layers 2a, 2b may form a sandwich material. The plurality of elastomeric layers 2a, 2b may be essentially immobile in relation to each other.

When the helmet does not have inner layer 103 the shock absorbing layer 102 will be in be in contact with the head of the user. Hence in certain embodiments the support members 7 may be in contact with the head of the user.

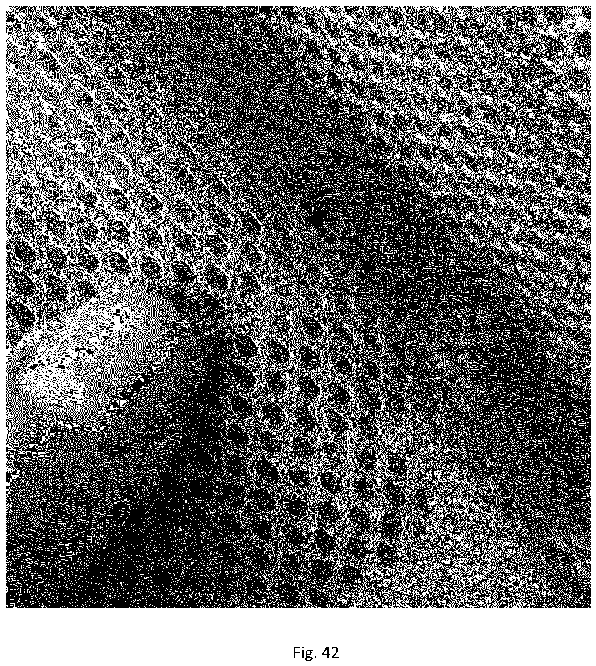

In one embodiment, shown in Fig 19, the shock absorbing layer 102 comprises a mesh layer 23 in contact with the elastomeric layer. Hence the elastomeric layer 2 is combined with a mesh layer 23, preferably a textile mesh. The mesh layer 23 is preferably one single mesh layer 23. The mesh layer 23 may be able to slide against elastomeric layer 2. The mesh layer 23 may have thickness of from 0.2 to 5 mm, more preferably from 0.5 mm to 3 mm. The mesh layer 23 has the advantage of absorbing oblique shocks when combined with elastomeric layer 2. The mesh layer 23 may be pliable. The mesh 23 may be stretchable. The mesh 23 may be made from any suitable material such as nylon or polyester. The mesh 23 may be produced using any suitable technology such as extrusion, weaving or knitting. The size of the openings 25 in the mesh may be for example 0.5 mm to 3 mm. Hence the individual strings in the mesh 23 may be separated by at most 0.5 mm to 3 m. The openings 25 mesh 23 may for example be form rhomboids or rectangles or quadrats. An example of a rhomboid mesh material is shown in Fig. 20. The mesh layer 23 preferably has low friction towards the elastomeric layer 2. The mesh 23 may be a mesh where the mesh material 24 (for example strings that form the mesh) covers at least 20%, more preferably at least 30 % and most preferably at least 50 % of the surface of the mesh material. Fig. 42 shows an example of a suitable mesh material where mesh material covers 24 at least 30% or more of the surface of the mesh material. Hence the openings 25 are at most 70 % of the surface of the mesh material.

The mesh may provide slidability in relation to elastomeric layer 2. The mesh layer 23 is preferably arranged between the support members 7 and the head of the user of the head-worn device 100.

The mesh layer 23 may be used for example together with a helmet 100 or other head worn device or other type of protective covering. The combination of the elastomeric layer with the mesh layer 23 is useful in any type of wearable shock protecting items such as for example helmets, hat, head band 26, shoulder pads, hip guards, or back protection items.

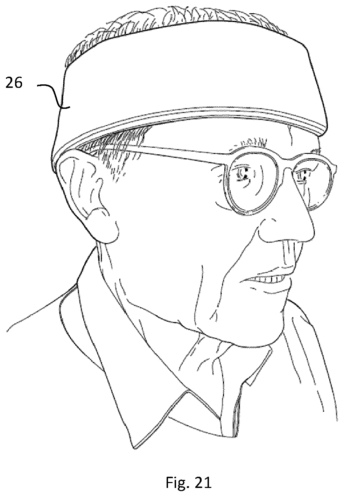

The head worn device 100 may be soft head-worn item such as a hat or a head band 26. The term "soft head-worn item" refers to an item suitable to be worn on the head. An example of a head band 26 is shown in Figs. 21-24. A soft head worn device differs from a helmet in that the outer layer 101 is not hard as in the case of a helmet. Also, the soft head-worn device may lack an attachment device such as a chin strap. Instead, the soft head-worn item typically attach to the head by having a snug fit. A soft head-worn item, in particular a head band 26, may be more comfortable than a helmet for use among elderly in everyday situations.

The soft head-worn item 26 comprises at least one elastomeric sheet 2. There may be one or more sheets 2, and the combined thickness of the sheets 2 is preferably from 5 to 12 mm, i.e. somewhat slimmer than in the case of a helmet. The elastomeric layer 2 may for example have a thickness of from 4 to 12 mm in the case of a hat or a head band 26. But the dimensions and proportions described in relation to Figs. 3-6 may also be used. In addition, the soft head-worn item may comprise at least one additional layer which may be made from for example cloth, such as wool, fleece, cotton or a synthetic polymer cloth, or other suitable material. The additional layer may be an outer soft layer 101 or an inner layer 103. The additional layer may provide heat insulation, colour or provide a comfortable feeling to the head.

In a preferred embodiment the elastomeric sheet 2 of the soft head worn item is as described with reference to Figs. 3-6.

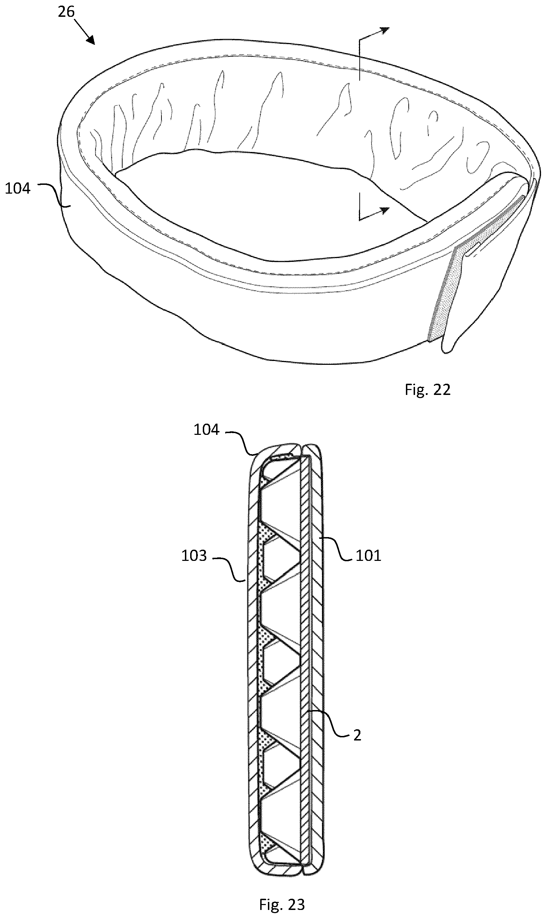

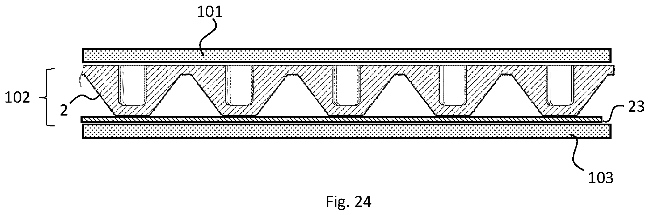

Fig.22-23 shows a soft head worn item, in this case a head band 26, that comprises an outer layer 101 and inner layer 103 band. Outer layer 101 and inner layer 103 form an outer covering 104 in which a strip of elastomeric sheet 2 is arranged. Outer layer 101 and inner layer 103 may be made from the same material (forming outer covering 104) and should provide a good feel towards the head and may also have a pleasant look. Outer layer 101 and inner layer 103 may for example be made from any suitable cloth or fabric commonly used for clothing such as polar fleece (Synchilla^{®}), nylon, wool or cotton. In a preferred embodiment the elastomeric layer 2 is arranged with mesh layer 23 between the head of the user and the elastomeric layer 2, in particular between elastomeric layer 2 and inner layer 103, and an example of this is shown in Fig. 24.

Hence the head band 26 or other soft head-worn item may comprise a strip of elastomeric sheet 2. The strip may have a width of from 5 to 10 cm, for example. The head band 26 is configured to be worn around the circumference of the head. The strip if elastomeric layer 2 does not necessarily have to go around the full circumference of the head. In particular the head band may be sized and located so that it protects the posterior part of the head thereby preventing injury in a backwards fall. It is preferred that the hat or the headband 26 protects the forehead and posterior part of the head.

The hat and the head band 26 may be provided in different sizes. The size of the hat and the head band 26 may be adjustable, with the use of a size adjustment device. The adjustment device adjusts the circumference of the hat or the head band 26. A headband 26 may have a holding part that goes over the top of the head, which prevents the headband from sliding down.

### Horseshoe

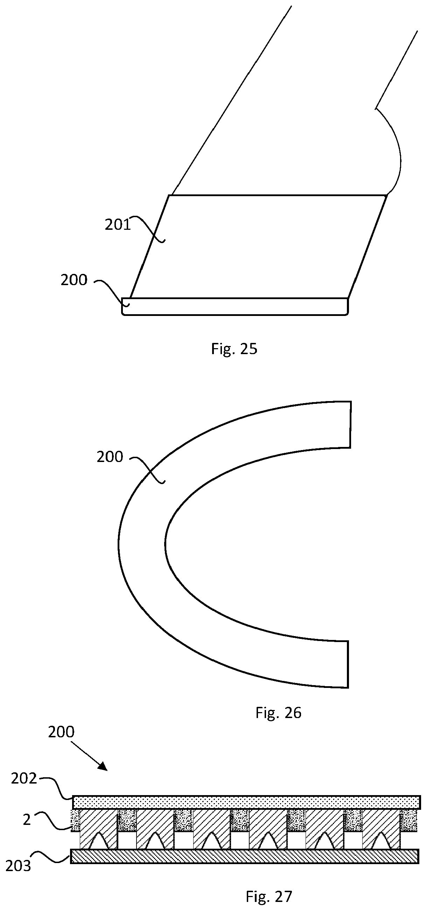

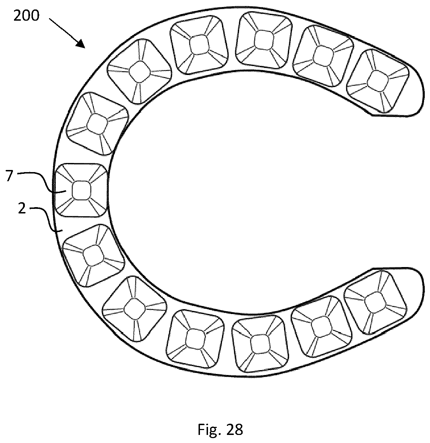

In a separate embodiment, shown in Figs. 25-30 the elastomeric sheet 2 is used in a horseshoe 200 for a hoof 201 of a horse. The purpose of the horseshoe 200 is to reduce the impact shock in the leg of a horse when the horse is walking, trotting or galloping. Hence, it is provided a horseshoe 200 comprising the elastomeric sheet 2. The thickness of the elastomeric sheet 2 is preferable from 5 mm to 20 mm, more preferably from 10 to 15 mm. The horseshoe 200 is designed either as a classic horseshoe that covers a part of the hoof 201 (Figs 26 and 28) or as covering the whole underside of the hoof 201.

The elastomeric sheet 2 is parallel to the underside of the hoof 201. The support members 7 may point upwards or downwards. The support members of the elastomeric sheet 2 are preferably pointing downwards as shown in Fig. 27. The horseshoe 200 may comprise one or more additional layers, such as a horseshoe top layer 202 and a horseshoe lower layer 203. One or both of horseshoe top layer 202 and horseshoe lower layer 203 may be a metal layer. It should be noted that horseshoe lop layer 202 and horseshoe lower layer 203 are optional.

The horseshoe 200 may be attached to the hoof 201 with nails as is known in the art of farriery, or in another suitable manner. The horseshoe 200 may comprise premade holes for attaching the horseshoe 200 to the hoof 201 with nails, and the holes may be metal reinforced.

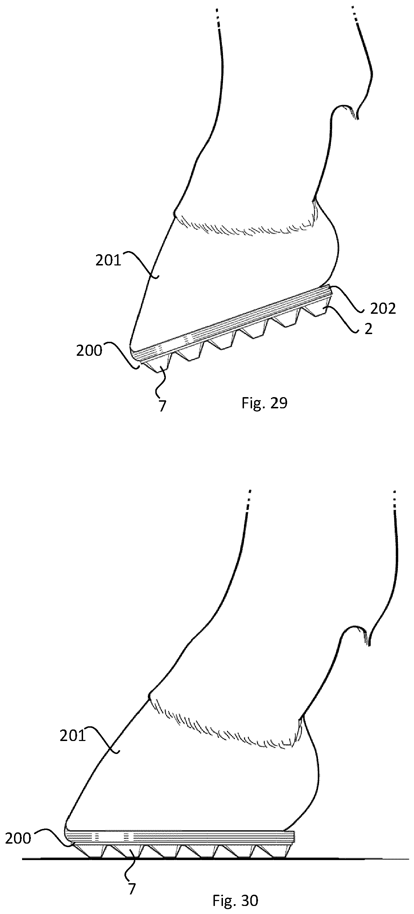

Fig. 29-30 shows an embodiment of a horseshoe where Fig. 29 shows the hoof of a horse without load and Fig. 30 shows the hoof shortly after the leg has been set down on the ground. Fig. 30 shows how the supports 7 are deformed and thereby absorbing the shock. The supports 7 may be directed upwards or downwards.

### Floor

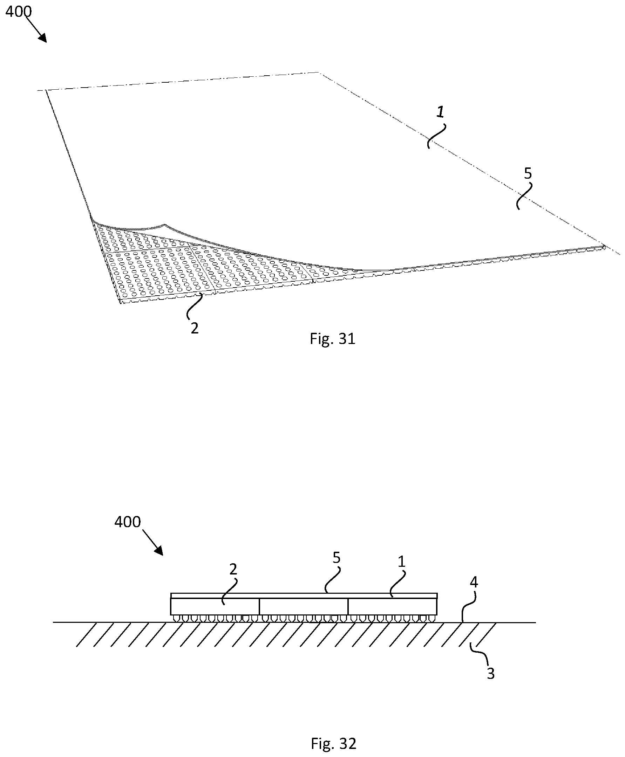

The elastomeric sheet 2 may also be used in a floor. With reference to Figs 31-41 floor 400 comprises or consists of an upper layer 1 and an elastomeric sheet 2, that may also be referred to lower layer 2 herein. Hence the lower layer consists of the elastomeric sheet. The floor 400 is intended to be installed on a base floor 3, which does not form a part of the invention. The base floor 3 has an upper surface 4, which preferably is even. The upper surface 4 of base floor 3 may for example be a concrete surface or other similar surface.

The upper layer 1 and the lower layer/elastomeric sheet 2 are preferably not permanently attached to each other. Hence, they may be provided separately. The upper layer 1 provides upper surface 5 of the floor 400 and may be configured to receive and distribute a load. The upper layer 1 may for example be provided as a sheet 15 (see below) for example a sheet 15 that can be rolled. The width of the roll may for example be from 1.5 m to 4 meters. An example a suitable upper layer 1 may be differently forms of available polymer flooring materials with a thickness of from 0.75 to 3 mm. An example of a useful flooring materials are vinyl floorings. The upper surface 5 of the upper layer 1 may be even, in particular in hospitals and elderly care environments, to allow rolling of hospital beds and walkers. Upper layer 1 is preferable durable and provides wear resistance, non-slip and possibly also some chock resistance.

It should be noted that, in some embodiments, it may be useful to attach upper layer 1 and lower layers 2 to each other in a permanent or a non-permanent manner, for example with glue.

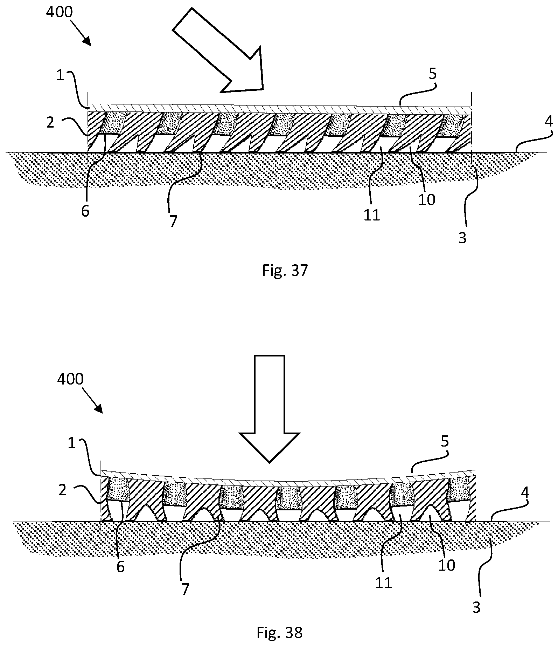

The lower layer 2 has an underside 6 with a plurality of deformable support members 7 that are configured to be in contact with the upper surface 4 of the base floor 3. The support members 7 are configured to be deformed when a load is placed on the upper surface 5 of the floor 400 (see below with reference to Figs. 37 and 38), such as for example at impact or shock. The main purpose of lower layer 2 is to provide shock absorption, that is to absorb the energy of an impact. This is achieved by the selection of the material of lower layer 2 and the deformable supports members 7.

The lower layer 2 is preferably thicker than the upper layer 1.

In a preferred embodiment, the embodiments described with reference to Figs. 3-6 is used for the lower layer 2/elastomeric sheet 2 of the floor. Hence the support members 7 are preferably formed as pyramids with a cavity 17.

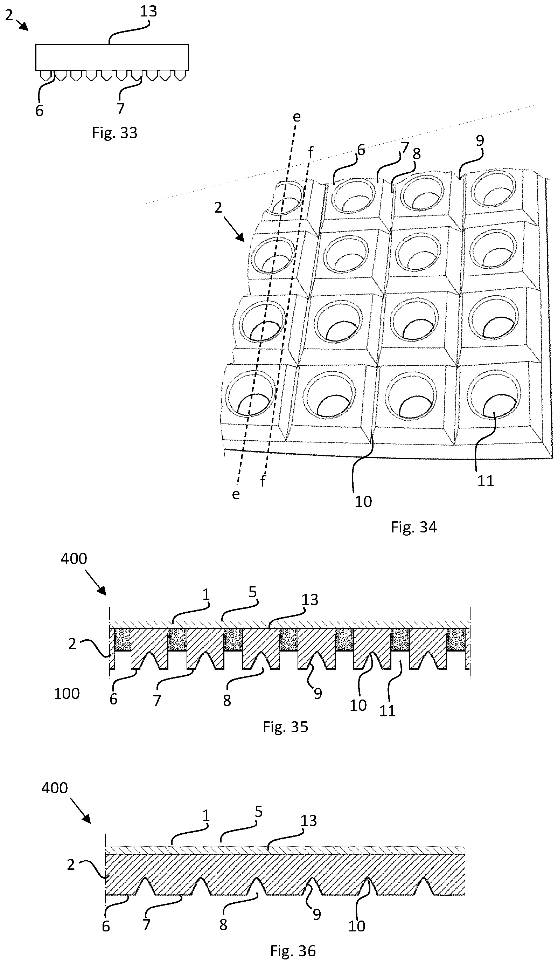

Fig. 33 is a general schematic drawing of lower layer 2/elastomeric layer 2 which has the same properties as the elastomeric layer of Fig. 1. As discussed above, the hardness of the lower layer 2 is preferably from 40 Shore A to 80 Shore A.

Figs. 34-36 show one embodiment of the support members 7 where the support members have a square configuration (grooves meet at 90° angles). The thickness of the lower layer 2 is preferably from 5 to 20 mm, more preferably 8-15 mm, even more preferably 8-12 mm.

The height of the support members 7 in relation to the total thickness of the lower layer 2 may be 25% -75 %, more preferably 30-60% of the total thickness of the lower layer 2.

The support members 7 may for example have the shape of members separated by grooves 8 in a criss-cross pattern as seen in Figs 34-36. The grooves 8 may have a depth which is 25 % to 75 %, more preferably 30-60%, of the thickness of the lower layer 2. The grooves 8 may for example have a depth of for example 4-6 mm. The grooves 8 may have a width of 3-8 mm, preferably 4-6 mm. The walls 9 of the grooves may be slanted as shown in Figs 34-36, such that the profile of the grooves 8 is conical. The grooves 8 may have a flat or a pointed bottom 10 (where a pointed bottom is shown in Figs 34-35). The lower layer 2 is preferably provided with trough holes or apertures, hereafter referred to as apertures 11. The apertures 11 go from the lower side 6 of the lower layer 2 to the second side (upper surface) 13 of the lower layer 2. Apertures 11 are preferably perpendicular to the second side 13 (upper surface 13). The apertures 11 may have diameter of from 4-7 mm and may be spaced for example 10-20 mm (c/c), preferably 13-18 mm apart. The shortest distance between the holes may be 6-10 mm. The apertures 11 may be placed in the centre of the support members 7, as shown in Figs 34-35.

Figs. 37 and 38 show how the floor 400 behaves upon receiving an oblique shock (Fig 37) or a translational shock (fig 38) when the support members 7 are shaped as is described with reference to Figs. 34-36. The arrows indicate the direction of impact on the upper surface 5 of the floor 400.

The floor 400, in particular the lower layer 2, is preferably not permanently attached to the base floor 3, so that for example the tiles 14 can be moved when necessary. Tiles 14 may be non-permanently attached to the base floor 3 with some kind of attachment means such as screws, hooks or similar that makes it easy to reconfigure the floor 400.

The floor 400 is preferably resistant against residual indentation as provided in ISO 24343. The floor 400 should preferably fulfil standards for sound isolation and fireproofness.

With reference to Figs 31, 32 and 39 the lower layer 2 is preferably provided as tiles 14 which may have any suitable shape for example, quadratic or rectangular. The area of the base floor 3 which is covered by sheet 15 is larger than the area covered by each of the tiles 14. Hence, for a sheet 15 a number of tiles 14 is used to cover the same area. However, this is not necessary and various embodiment the upper layer 1 and the lower layer 2 are provided in any suitable size. The tiles 14 of the lower layer 2 of the floor 400 may be designed to be locked to each other, but this is not necessary since the upper layer 1 protects them.

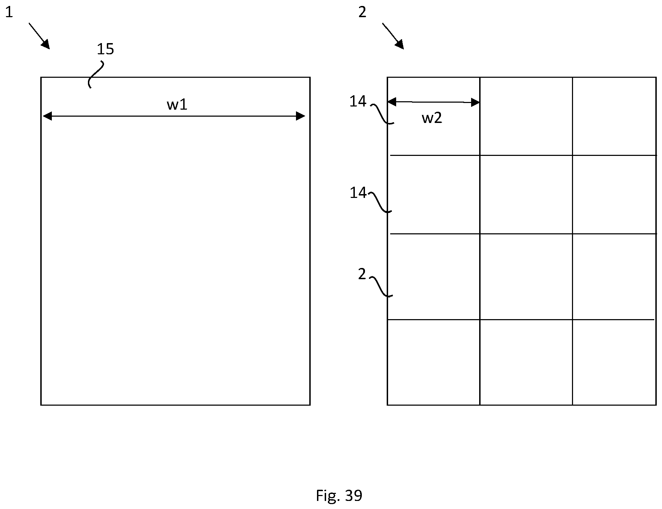

Fig. 39 shows example of a sheet 15 intended to cover the same area as twelve tiles 14. Preferably the area covered by the sheet 15 is at least twice, more preferably at least four times and even more preferably at least 10 times the area covered a tile 14.

In one embodiment the sheet 15 has a predetermined width w1 and the width w2 or length of a tile 14 is the width of the sheet divided by a whole number which is 2 or larger (2, 3, 4, 5, 6...). In Fig. 39 the tiles 14 are quadratic with a width w2 which is a third of the width w1 of the sheet. The width w2 of the tiles may be for example 30 cm -100 cm where 40-60 cm is preferred.

A flooring system may comprise tiles 14a, 14b with different hardness for the lower layer 2. Preferably the system comprises tiles 14a,14b with at least two different degrees of hardness. For example, the flooring system may comprise tiles 14 with a hardness of Shore 50 and shore 80; or shore 40 and shore 70; or shore 40, 60 and 80. One set of tiles 14 may have a hardness of from 40 to 80 shore A (or from 40 to 60 Shore A) and one other set of tiles 14 may have a higher hardness such as from 85 Shore A, or higher. This makes it easy to configure floor 400 such that it has zones with some harder areas and some softer areas.

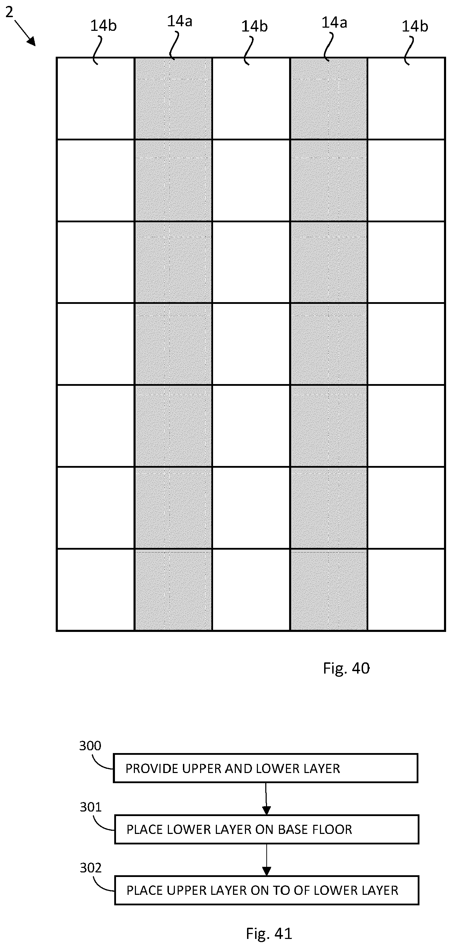

In one embodiment at least two different hardness tiles 14 are used. For example the harder tiles 14a (grey colour in Fig. 40) are used to form a track for a hospital bed, whereas softer tiles 14b are used for the other parts of the floor 400.

It is preferred that the upper layer 1 is not permanently attached to the lower layer 2, and it is preferred that the floor 400 in particular the lower layer 2 is not permanently attached to the base floor 3. This makes it easy to reconfigure the floor 400.

Fig. 41 is a flowchart showing a method. In step 300 there is provided an upper layer 1 and a lower layer 2. The upper layer 1 is provided as a sheet 15, and the lower layer 2 is provided as a plurality of tiles 14, where the floor-covering area of the sheet 15 is larger than the floor-covering area of each of the tiles 14. In step 301 the tiles 14 are placed on the base floor 3. In one embodiment tiles 14 with at least two different degrees of hardness is placed on the base floor 3. In step 303, the sheet 15 is placed on top of the tiles 14 so that the tiles 14 are covered by the sheet 15.

The flooring system is suitable for use in hospitals and other places for care of the elderly where head injuries caused by falling often happens. If a person falls on the floor, the floor will receive and absorb the shock, which prevents head injury.

The flooring system is modular. This is very useful. For example, floor with a slighter higher hardness can be selected for places where hospital beds are located or where they are frequently rolled, such as in the middle of corridors. Higher softness can be selected for other areas.

Moreover, when the use of a room is altered, it is easy to change the hardness at a certain place of the floor by simply lifting and removing the upper layer, which is preferably not attached to the lower layer, and moving the titles such that the required configuration of the floor is obtained.

The floor provided is resistant to residual indentations, caused by for example heavy furniture, such as for example hospital beds.

Preferably there are tiles with at least two different degrees of hardness. This has the advantage that it is possible to configure the floor with different degrees of hardness in different areas. This makes it possible to have areas where it is easier to roll a hospital bed, for example.

In one embodiment, the tiles are not permanently attached to the base floor. This makes it easy to reconfigure the floor.

It is realized that everything which has been described in connection to one embodiment is fully applicable to other embodiments, as compatible. Hence, the invention is not limited to the described embodiments, but can be varied within the scope of the enclosed claims and clauses.

While the invention has been described with reference to specific exemplary embodiments, the description is in general only intended to illustrate the inventive concept and should not be taken as limiting the scope of the invention. The invention is generally defined by the claims.

The following clauses disclose, in a non-limiting manner, other embodiments of the invention that may be the subject of one or more divisional or continuing applications:
Clause 1. A head-worn device such as a helmet, a hat or a head band for protecting the head against impact shock, the head worn device comprising an elastomeric sheet that has a plurality of deformable support members configured to be in contact with the head or a second layer of the head-worn device, said support members being configured to be deformed upon shock, where the support members has apertures from one side of the elastomeric sheet to the other side of the elastomeric sheet, where the hardness of the elastomeric sheet is from 40 Shore A to 80 Shore A.
Clause 2. The head worn device of clause 1 where there are two parallel sheets of elastomeric material and where the support members are facing towards each other.
Clause 3. The head worn device of clause 2 where the two parallel sheets are attached to each other.
Clause 4. The head worn device of clause 2 or 3 where the two parallel sheets are glued together.
Clause 5. The head worn device of any one of clauses 1 to 4 where the support members are separated by grooves, said grooves having a conical transverse profile.
Clause 6. The head worn device of any one of clauses 1 to 5 where the height of the support members in relation to the total thickness of the elastomeric sheet is 25% -75 % of the total thickness of the elastomer layer.
Clause 7. The head worn device according to any one of clauses 1 to 6 where the thickness of the elastomeric layer is from 5 mm to 20 mm.
Clause 8. A flooring system configured for providing a floor to be installed on a base floor, the flooring system comprising an upper layer and a lower layer that are not permanently attached to each other, where the underside of the lower layer has a plurality of deformable support members configured to be in contact with the base floor, and to be deformed when a load is placed on the upper surface of the floor, and where the upper layer is provided as a sheet and the lower layer is provided as tiles, where the floor-covering area of the sheet is larger than the floor-covering area of each of the tiles.
Clause 9. The flooring system of clause 8 comprising tiles with at least two different degrees of hardness.
Clause 10. The flooring system of clause 8 or 9 where the floor-covering area of the sheet is at least twice the floor-covering area of each of the tiles.
Clause 11. The flooring system of any of clauses 8 to 10 where the hardness of the lower layer is from 40 Shore A to 80 Shore A.
Clause 12. The flooring system of any one of clauses 8 to 11 where the support members have apertures from the upper side to the lower side of the lower layer.
Clause 13. The flooring system of any one of clauses 8 to 12 where the support members are separated by grooves, said grooves having a conical transverse profile.
Clause 14. The flooring system of any one of clauses 8 to 13 where the tiles are not permanently attached to the base floor.
Clause 15. A method of providing a floor on a base floor comprising the steps of
   a) providing an upper layer and a lower layer, and where the underside of the lower layer has a plurality of deformable support members configured to be in contact with the base floor, and to be deformed when a load is placed on the upper surface of the floor, and where the upper layer is provided as a sheet, and the lower layer is provided as tiles, where the floor-covering area of the sheet is larger than the floor-covering area of each of the tiles,
   b) placing tiles on at least a part to the base floor,
   c) placing the sheet so that it covers the tiles.
Clause 16. The method of clause 15 where tiles with at least two different hardnesses is placed on the base floor.
Clause 17. The method of clause 15 or 16 where the upper layer and lower layer are not permanently attached to the lower layer.
Clause 18. The method of any one of clauses 16-17 where the floor is not permanently attached to the base floor.
Clause 19. A floor comprising an upper layer and a lower layer where the upper layer is configured to receive and distribute a load, and where the underside of the lower layer has a plurality of deformable support members configured to be in contact with a base floor, and to be deformed when a load is placed on the upper surface of the floor, where the hardness of the lower layer is from 40 Shore A to 80 Shore A, where the support members has apertures from the upper side to the lower side of the lower layer.
Clause 20. The floor of clause 19 where the support members are separated by grooves, said grooves having a conical transverse profile.
Clause 21. A floor comprising an upper layer and a lower layer where the lower layer has a first side and a second side, where the first side has a plurality of deformable support members, where the hardness of the material of the sheet is from 40 Shore A to 80 Shore A.
Clause 24. An elastomeric sheet which has a plurality of deformable support members where the support members have apertures from one side of the sheet to the other side of the sheet, where the hardness of the material of sheet is from 40 Shore A to 80 Shore A. Clause 22. A horseshoe comprising an elastomeric sheet with a thickness of from 5 mm to 20 mm, the elastomeric sheet having with a first side and a second side, where the first side has a plurality of deformable support members, and where the hardness of the material of the sheet is from 40 Shore A to 80 Shore A.
Clause 23. The horseshoe according to clause 22 where the support members have a cavity with an opening towards the second side of the elastomeric sheet.
Clause 24. A horseshoe comprising an elastomeric sheet which has a plurality of deformable support members where the support members have apertures from one side of the sheet to the other side of the sheet, where the hardness of the sheet is from 40 Shore A to 80 Shore A.
Clause 25. A wearable shock- protecting item comprising an elastomeric sheet having a first side and a second side, where the fist side has a plurality of deformable support members, where the hardness of the sheet is from 40 Shore A to 80 Shore A, where the item comprises a mesh layer in contact with the elastomeric layer.

### EXAMPLE 1

A material with the design of Figs 9-11 and 34-36 was formed from natural rubber with various degrees of hardness. The hardness was measured using Shore A methodology. The results are shown in Table 1.

**Table 1**

| | Shore A value | Standard deviation | |
|---|---|---|---|
| Sample 1 | Sh40 | | +/- 2-3% |
| Sample 2 | Sh50 | | +/- 2-3% |
| Sample 3 | Sh60 | | +/- 2-3% |
| Sample 4 | Sh70 | | +/- 2-3% |

### EXAMPLE 2

A material (an elastomeric layer) was formed by using the material from Example 1 covered by 2 mm vinyl material.

The impact energy/acceleration was measured using a 3.9 kg dummy head that was allowed to fall 55 cm on to a stell plate surface covered by the material with 50 Shore A or a naked surface without the material. The impact was reduced with 55 % compared to no dampening material.

### EXAMPLE 3

A 6.5 kg steel body was allowed to fall onto the 50 Shore A material from 60 cm. The energy was reduced with 30% compared to control.

### EXAMPLE 4

An elastomeric layer with the shape of Figs. 3-6 was formed from butyl rubber (IIR). The material had a hardness of between 55 and 56 Shore A. The total thickness of the elastomeric layer was 7 mm and the height of the support members was 6 mm.

### EXAMPLE 5

A 3.9 kg dummy head containing an accelerometer was allowed to fall from 55 cm or 110 cm onto a steel plate. The sheet was attached to the dummy or the steel plate as described below. The steel plate was horizontal to achieve a straight impact or angled at 45° to obtain an oblique impact. The percentage dampening in relation to using no dampening material is shown in Table 2.

For head band trials a head band with outer covering, an elastomeric layer according to Example 5 and a pliable polymer mesh arranged between the deformable supports and the outer covering was attached to the dummy, and allowed to fall to the steel plate. A photo of the mesh material used is provided as Fig. 42. The deformable supports were directed upwards, towards the dummy.

For horseshoe trials, a regular metal horseshoe with an elastomeric layer with the support members directed upwards, was attached to the 3.9 kg dummy and allowed to fall to the steel plate. A regular steel horseshoe was used as control.

For floor trials the dummy was allowed to fall on to the steel plate which was covered by the material covered by a vinyl upper layer. The deformable supports were directed downwards.

Table 2 shows percentage decrease in acceleration force compared to control.

**Table 2**

| | Straight impact | | Oblique impact | |
|---|---|---|---|---|
| | 55 cm | 110 cm | 55 cm | 110 cm |
| Head band | 51% | 24% | 65% | 58% |
| Floor | 47% | 32% | 64% | 63% |
| Horseshoe | 54% | n.a | n.a | n.a |

## Claims

1. A flooring system configured for providing a floor to be installed on a base floor, the flooring system comprising an upper layer and a lower layer that are not permanently attached to each other, where the underside of the lower layer has a plurality of deformable support members configured to be in contact with the base floor, and to be deformed when a load is placed on the upper surface of the floor, and where the upper layer is provided as a sheet and the lower layer is provided as tiles, where the floor-covering area of the sheet is larger than the floor-covering area of each of the tiles.

2. The flooring system of claim 1 comprising tiles with at least two different degrees of hardness.

3. The flooring system of claim 1 or 2 where the floor-covering area of the sheet is at least twice the floor-covering area of each of the tiles.

4. The flooring system of any of clauses 1 to 3 where the hardness of the lower layer is from 40 Shore A to 80 Shore A.

5. The flooring system of any one of claims 1 to 3 where the lower layer is provides as tiles and where a first set of tiles has a hardness of from 40 to 80 shore A and one other set of tiles has a hardness of 85 Shore A, or higher.

6. The flooring system of any one of claims 1 to 5 where the support members have apertures from the upper side to the lower side of the lower layer or where each of the support members has at least one cavity.

7. The flooring system of any one of claims 1 to 6 where the support members are separated by grooves, said grooves having a conical transverse profile.

8. The flooring system of any one of claims 1 to 7 where the tiles are not permanently attached to the base floor.

9. The flooring system of any one of claims 1 to 8 where the thickness of the lower layer is from 8 mm to 15 mm.

10. A floor obtained by installing the flooring system of any one of claims 1 to 9 on a base floor.

11. A method of providing a floor on a base floor comprising the steps of
a) providing an upper layer and a lower layer, and where the underside of the lower layer has a plurality of deformable support members configured to be in contact with the base floor, and to be deformed when a load is placed on the upper surface of the floor, and where the upper layer is provided as a sheet, and the lower layer is provided as tiles, where the floor-covering area of the sheet is larger than the floor-covering area of each of the tiles,
b) placing tiles on at least a part to the base floor,
c) placing the sheet so that it covers the tiles.

12. The method of claim 11 where tiles with at least two different hardnesses is placed on the base floor.

13. The method of claim 12 where one set of tiles has a hardness of from 40 to 80 shore A and one other set of tiles has a hardness of 85 Shore A, or higher.

14. The method of any one of claims 11 to 13 where the upper layer and lower layer are not permanently attached to the lower layer.

15. The method of any one of claims 11 or 14, where the floor is not permanently attached to the base floor.
